# EUROPEAN PATENT APPLICATION

(11) **EP 4 468 058 A1**
(43) Date of publication of application: **27.11.2024**
(21) Application number: 23275084.4
(22) Date of filing: 25.05.2023
(51) Int. Cl.: G02B 27/01

(54) **FRAME FOR A HEAD WORN DISPLAY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is disclosed a frame for supporting a head worn display on a user, comprising a first portion arranged for a first user eye and comprising a first casing for optical components; a first back mount for a back reflector the back mount defining a plane for the back reflector and a corresponding back reflector axis perpendicular to the plane; a first front mount for a combiner, the front mount defining a plane for the combiner and a corresponding combiner axis perpendicular to the plane; wherein the back mount is arranged to position a back reflector proximate to the user's first brow and such that the casing is arranged to extend from an inner end proximate to the brow to an outer end proximate to the user's temple, a second portion arranged for the other eye and comprising: a second casing for second optical components; a second back mount for a second back reflector, the back mount defining a plane for the back reflector and a corresponding back reflector axis perpendicular to the plane; a second front mount for a second combiner for the other eye the front mount defining a plane for the combiner and a corresponding combiner axis perpendicular to the plane; wherein the second back mount is arranged to position a second back reflector proximate to the user's other brow and such that the second casing is arranged to extend from an inner end proximate to the other brow to an outer end proximate to the users other temple, a bridge member extending between the first and second casing, thereby defining a frame transverse axis, arranged to be worn substantially parallel with the user's transverse plane the frame transverse axis defining an x-axis perpendicular thereto and for alignment with the users forward view axis when worn, wherein each of the back mounts and each of the front mounts extend downwards from the bridge member.

## Description

### FIELD

The present invention relates to a frame for supporting a head worn display on a user. Further, the present invention relates to a head worn display having such a frame.

### BACKGROUND

Head worn displays typically comprise an optical train or optical architecture having numerous optical components. These components are distributed about the user to preserve the associated optical functionality. Such optical components are supported at a frame. Characteristics of frames for head worn displays vary significantly.

### SUMMARY

According to a first aspect of the invention there is provided a frame for supporting a head worn display on a user, comprising
a first portion arranged for a first user eye and comprising
   A first casing for optical components;
   A first back mount for a back reflector the back mount defining a plane for the back reflector and a corresponding back reflector axis perpendicular to the plane;
   A first front mount for a combiner, the front mount defining a plane for the combiner and a corresponding combiner axis perpendicular to the plane;
   wherein the back mount is arranged to position a back reflector proximate to the user's first brow and such that the casing is arranged to extend from an inner end proximate to the brow to an outer end proximate to the user's temple,
a second portion arranged for the other eye and comprising:
   A second casing for second optical components;
   A second back mount for a second back reflector, the back mount defining a plane for the back reflector and a corresponding back reflector axis perpendicular to the plane;
   A second front mount for a second combiner for the other eye the front mount defining a plane for the combiner and a corresponding combiner axis perpendicular to the plane;
   Wherein the second back mount is arranged to position a second back reflector proximate to the user's other brow and such that the second casing is arranged to extend from an inner end proximate to the other brow to an outer end proximate to the users other temple,
   A bridge member extending between the first and second casing, thereby defining a frame transverse axis, arranged to be worn substantially parallel with the user's transverse plane the frame transverse axis defining an x-axis perpendicular thereto and for alignment with the users forward view axis when worn,
   Wherein each of the back mounts and each of the front mounts extend downwards from the bridge member.

The at least one casing may have an elongate form and thereby define a casing axis which is substantially coplanar with the frame transverse axis and thereby define an XY plane, wherein the casing axis may be arranged to be inclined to the x-axis by 45-60 degrees, to thereby approximately follow the contour of the user's forehead. At least one casing may be arranged to be inclined by 50 to 55 degrees.

The bridge member may comprise a back beam comprising the first and second back mounts, the back beam extending between the first casing and the second casing, a front beam, separated from the back beam and comprising the first front mount and the second front mount, the front beam extending between the first casing and the second casing. Further, a cross-linking strut may extend between the back beam and the front beam. There may be provided an attachment point at an upper surface for fixture to a helmet mount.

The frame may comprise an end casing with an image mount for an image source; a relay optics section defining a relay optics axis and arranged facing the end casing; and a casing reflector mount for a casing reflector arranged facing the rely optics section and being for passing light from the relay optics to an associated back reflector.

Optionally, the relay optics axis is substantially aligned with the casing axis, the image mount defines an image plane and a corresponding image axis perpendicular thereto, the image axis being inclined to the casing axis, the casing reflector mount defines a casing reflector plane and corresponding casing reflector axis for the casing reflector, the casing reflector axis being inclined to the relay optics axis in the xy plane and in the zx-plane, the back reflector mount defines a back reflector plane and a back reflector axis, the back reflector axis being inclined to the relay optics axis in the xy plane and in the zx-plane, and the front mount for a combiner defines a combiner plane and corresponding combiner axis perpendicular to the plane, the combiner axis being inclined to the relay optics axis in the xy plane and in the zx-plane.

As such, the image axis may be inclined to the casing axis in the xy-plane and/or in the zy-plane. For example, the image axis may be inclined to the casing axis in the xy-plane and/or in the zy-plane in the range of 5 and 15 degrees.

The casing reflector axis may be inclined to the relay optics axis in the xy-plane in the range of 20 to 30 degrees and in the zx-plane in the range of 10 to 20 degrees, the back reflector axis may be inclined to the relay optic axis in the xy-plane in the range of 40 to 50 degrees and in the zx-plane in the range of 130 to 150 degrees, and the combiner axis may be inclined to the relay optic axis n the xy-plane in the range of 40 to 50 degrees and in the zx-plane in the range of 130 to 150 degrees.

The end casing may have the form of an open casing and may couple to the relay optics section at a docking portion over a range of positions, thereby being fixable in a range of alignments between the image mount and the relay optics axis.

The first back mount and the first combiner mount may be tilted relative to the second back mount and the second combiner mount, in the xy-plane by an angle in the range of 2-6 degrees.

The first section and the second section may be configured when worn to be substantially symmetrical about the users median plane.

Each of the first and second casing for optical components may comprise an intermediate housing for accommodating a set of lenses of an optical relay.

According to a second aspect of the invention, there is provided a head worn display comprising: a frame according to any one of the preceding claims; a first and second back reflector coupled to the respective back reflector mounts; a first and second optical assembly installed into the respective casings; and a first and second combiner coupled to the respective front mounts.

### BRIEF DESCRIPTION OF THE FIGURES

Embodiments of the invention will now be described by way of example only with reference to the figures, in which:
Figure 1a and 1b show views of a head worn display device, and defines cross-sections X-X and Y-Y through, respectively, right and left eye casings of the display device;
Figure 2a shows a view of the head worn display device shown in Figures 1a and 1b, with a view through cross section X-X through right eye casing, an area S is defined around the cross section, and Figure 2b shows an enlarged view of area S;
Figure 3 shows cross section Y-Y through left eye casing;
Figures 4a, 4b and 4c show top (or XY-plane), front (ZY plane) and side (ZX plane) views of a user wearing the head worn display device;
Figure 5 shows a mount and jig for assembly of the head worn display device; and
Figure 6 shows flowchart for a method of assembling the head worn display.

### DETAILED DESCRIPTION

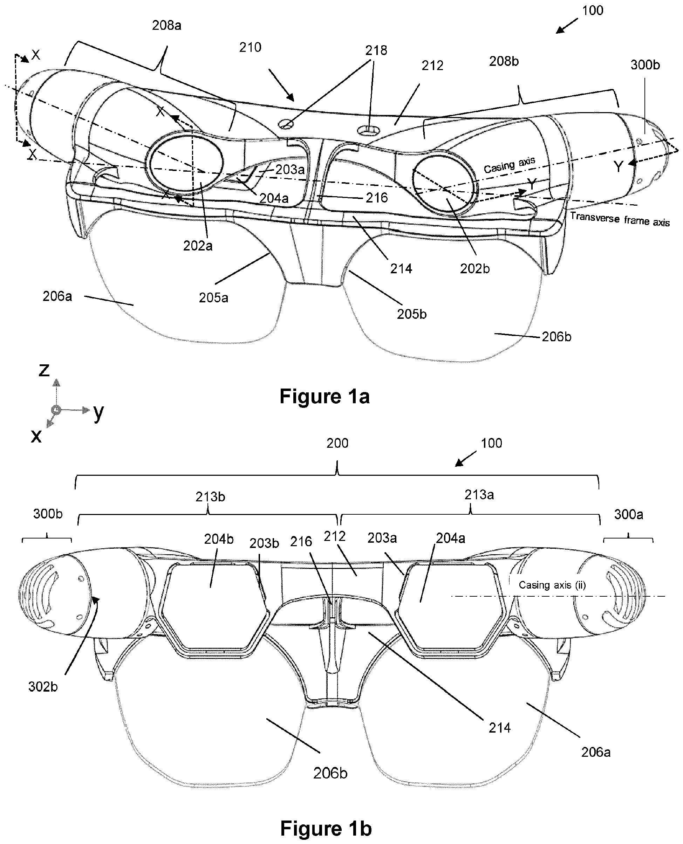

With reference to the Figures, and in particular Figures 1a, 1b, 2a, 2b and 3, there is shown an example head worn display 100.

(For ease of viewing, not all components are labelled in all figures. Further, the figures use a naming convention whereby a component on the right eye side of the device has an 'a' suffix and an equivalent component on the left side has a 'b' suffix. Accordingly a reference to a `b' component will be clear to the reader even if only the equivalent 'a' component is shown or labelled in the figures).

The head worn display 100 is arranged to be worn in the field of view of a user.

The head worn display 100 comprises a sub-assembly 200.

The sub assembly 200 comprises a frame 210.

The frame 210 comprises a first portion 213a arranged for a user's right eye, and a second portion 213b arranged for the user's left eye.

The first portion 213a comprises a first casing 208a for housing a first set of optical components, a mount 203a for a back reflector 204a, and a mount 205a for a front combiner 206a. The back reflector may alternatively be referred to as a brow reflector or brow mirror. The back mount may be alternatively referred to as the brow mount.

The first casing 208a comprises a mount 201a for a casing reflector 202a and a cavity 212a for receiving an optical relay assembly. The first casing 208a has a generally elongate form and thereby defines a casing axis. The optical relay assembly may tend to define, with a constituent set of aligned optical lenses, an optical relay axis. The casing is generally configured such that the casing axis aligns with or is at least parallel to the in situ optical relay axis.

The second portion 213b comprises second casing 208b for a second set of optical components, a second mount 203b for a second back reflector 204b, and a second mount 205b for a second front combiner 206b.

The second casing 208b comprises a mount 201b for a casing reflector 202b and a cavity 212b for receiving an optical relay assembly 400b.

The second casing 208b comprises a mount 201b a casing reflector 202b and a cavity 212b for receiving an optical relay assembly 400b. The second casing 208b has a generally elongate form and thereby defines a second casing axis.

The second casing axis and the first casing axis are substantially coplanar but are inclined to one another by approximately 130 to 100 degrees. The plane defined by these axes, the XY-plane, in turn defines a Z-axis perpendicular thereto. The Z-axis relates to the top and bottom of the device when worn in a horizontal position.

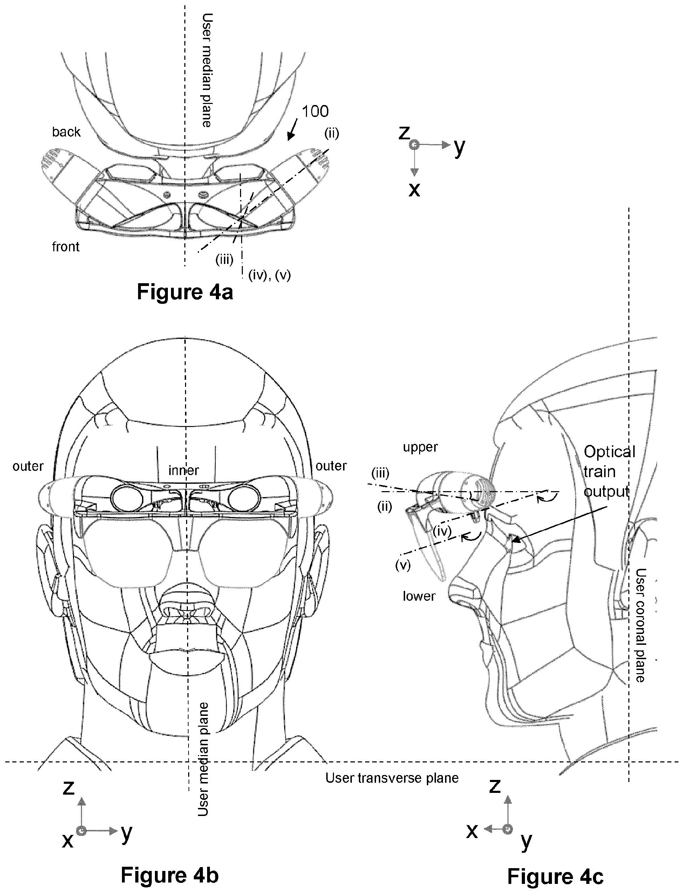

For each respective portion, the back reflector 204a, 204b and the back mount 203a, 203b define a plane for the back reflector, and a corresponding back reflector axis (see axis (iv) in Figure 4) perpendicular to the plane.

For each respective portion, the front combiner 206a, 206b and front mount 205a, 205b define a plane for the combiner, and a corresponding combiner axis perpendicular to the plane.

The back reflector mount and the combiner mount are arranged such that the back reflector and combiner can be supported in substantially parallel planes. Accordingly, the back reflector axis and the combiner axis are substantially parallel.

The frame 210 further comprises a bridge member extending between the first and second casing and defining a frame transverse axis. The frame transverse axis is substantially coplanar with the first and second casing axis, in the XY-plane.

The bridge member comprises a separate back beam 212 and front beam 214, each extending between the casings 208a, 208b. The back beam 212 extends between a back surface of the casings 208a, 208b. The front beam 214 extends between a front surface of the casings 208a, 208b.

The back beam 212 is arranged to be higher than the front beam 214.

The back beam 212 has extending from it the back reflector mounts 203a and 203b. The front beam 214 has extending from it the front mounts 205a, 205b.

The bridge member further comprises a cross-linking strut 216 which extends between the front 212 and back 214 beams from a central position of the HWD 100 along the frame transverse axis.

As such, the frame 210 defines an aperture on each side of the device, between the casing, the front beam, the back beam and the cross-linking strut.

The bridge member further comprises attachment point 218 which is in this example formed by holes adapted (e.g. by spacing, number, or threading) for connection to a helmet or helmet bracket.

The frame 210 may be formed as a single continuous structure (monocoque), for example by an additive manufacturing process.

The frame 210 is arranged to be symmetrical when worn, about the user's median plane. However in other examples, the frame may not be symmetrical.

In addition to the frame 210, the sub-assembly 200 comprises a first and second combiner 206a, 206b, a first and second back reflector 204a, 204b, a first and second casing reflector 202a, 202b, and an optical relay assembly 400a, 400b.

The first and second back reflectors 204a, 204b are mounted at respective back mounts 203a, 203b and extend down from the frame 210, specifically the back beam 212.

The first and second combiners 206a, 206b are mounted at respective mounts 205a, 205b and extend down from the frame 210, specifically the front beam 214. The first and second combiners 206a, 206b extend lower than the back reflectors 204a, 204b such that they can be viewed by a used unobstructed.

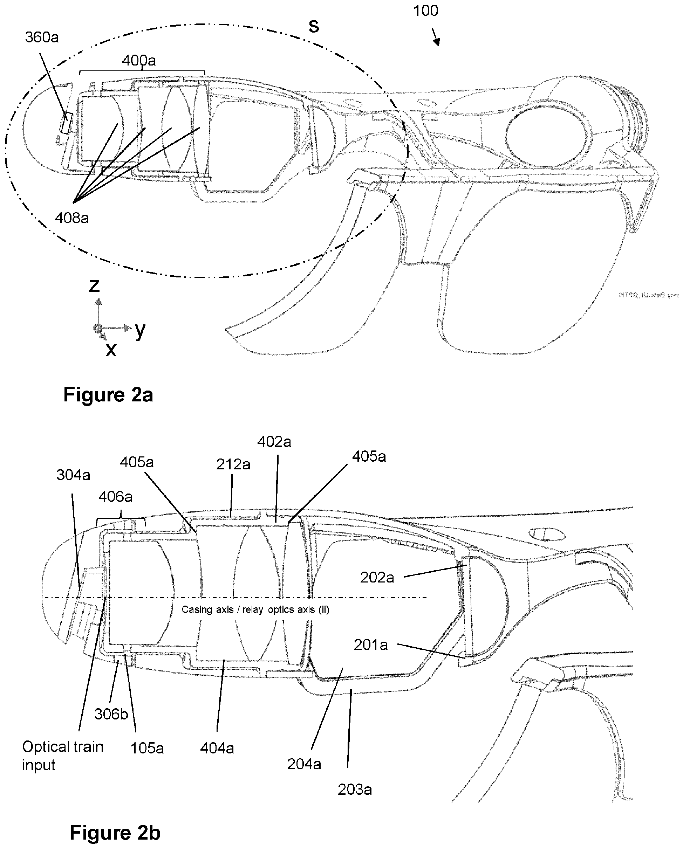

Further referring to Figures 2a and 2b there are shown internal features of the sub-assembly 200.

The first and second casing reflectors 202a, 202b are mounted at the casing mounts 201a, 201b within their respective casings 208a, 208b.

The reflectors and mounts tend to terminate the casing at an innermost portion.

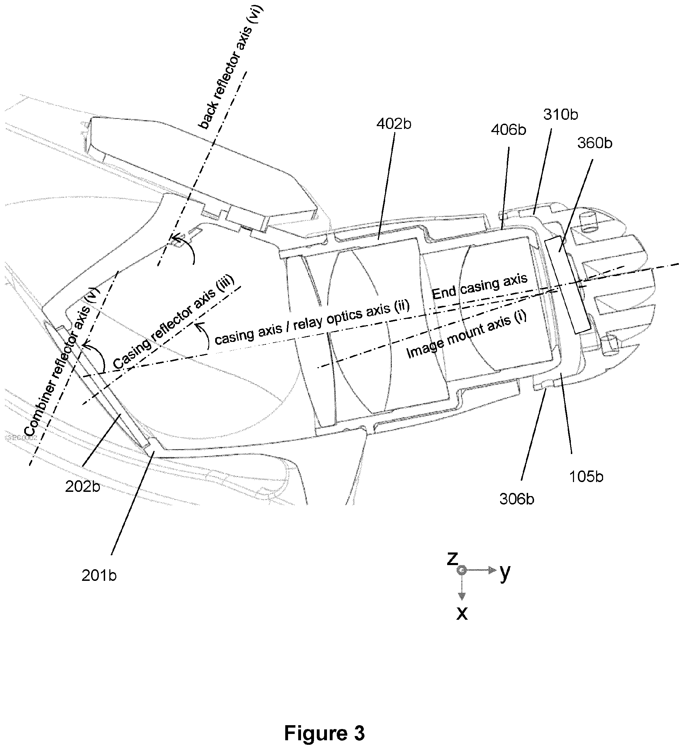

Each casing reflector 202a, 202b and associated mount defines a plane and an associated casing reflector axis perpendicular thereto. With particular reference to Figure 3 and Figure 4, the casing reflector axis (iii) is inclined to the casing axis (ii) in two planes: in the XY plane by 20 to 30 degrees, and in the ZX plane by 10 to 20 degrees.

Each back reflector 204a, 204b and mount defines a back reflector plane and a corresponding back reflector axis (vi). Each back reflector axis is inclined to the relay optic axis in two planes: in the XY-plane by 40 to 50 degrees, and in the ZX-plane by 130 to 150 degrees.

Each combiner 206a, 206b and mount defines a combiner plane and a corresponding combiner axis (v). Each combiner is inclined in the XY-plane by 40-50 degrees and in the ZX plane by 130 to 150 degrees.

The optical relay assemblies 400a, 400b are mounted within the respective casing cavities 212a, 212b.

Each optical relay assembly comprises an intermediate housing 402a, 402b and a series of relay lenses 408a, 408b.

The intermediate housing 402a has a stepped cylindrical inner surface 404a which defines at least one ledge 405a. Each ledge 405a is configured to receive a relay lens and thereby accurately locate the lens relative to the intermediate housing 402a.

The outer surface of the intermediate housing 402a is shaped to correspond with the inner surface of the casing cavity 212a. In this example the intermediate housing has a stepped cylindrical outer surface.

Accordingly, the intermediate housing 402a has the form of a stepped tube and as such can be manufactured (e.g. by machining and more specifically by a lathe process) with a high degree of accuracy.

The outermost end of the intermediate housing 402a is configured to extend beyond the casing 208a and, so exposed, is able to couple to the end casing 300a.

Further, referring to Figures 2a, 2b and 3, the head worn display device 100 also comprises a first 300a and second 300b end casing. Each end casing 300a, 300b is attached at a respective outer side of the sub-assembly 200.

Each end casing 300a, 300b has the form of an open casing, and so defines an open side 302a, 302b. The open side 302a, 302b is configured to couple to the outermost portion 406a, 406b (or docking portion) of the sub-assembly 200.

The open side 302a, 302b defines a substantially cylindrical inner surface 310a, 310b which in the present example is wider than the outer surface of the sub-assembly 200. Accordingly the end casing 300a, 300b and the sub-assembly 200 do not mate perfectly but leave between them an interstitial gap 105a, 105b. This allows for a range of alignments and positions at which the end casing 300a, 300b and sub-assembly 200 may be held prior to fixing together.

The open side 302a, 302b also comprises conduits 306a, 306b which extend between the ambient environment and the internal surface of the casing 300a, 300b. Such conduits 306a, 306b enable the ingress of adhesives.

Further each end casing 300a, 300b comprises a mount 304a, 304b on which is mounted an image source 360a, 360b. The mount defines a plane on which the image source 360a, 360b is to be mounted, and therefore defines a corresponding image mount axis (i), which is inclined to the end casing axis.

Image source 360a, 360b is an array of pixels for directly generating light bearing virtual images. In this example the image source 360a, 360b is an LED array, and more specifically an MLED array. A feed for driving the image source is connected to the image source.

Figure 4 shows the head worn display 100 being worn in position by a user. The user defines a transverse plane, a frontal plane and a median plane.

When the HWD 100 is worn by the user, the XY-plane of the HWD 100 is parallel with the user's transverse plane. Further, the casing axis sit approximately at user brow level and their inclinations to the HWD 100 transverse cause them to extend outward towards the respective temples.

Also approximately at user brow level are the back reflectors.

It can also be seen that the central portion of each eye's reflectors sit generally in the same ZX-plane, parallel to the user median plane.

In operation, a virtual image or virtual imagery is encoded as a drive signal and fed into the image source 360a, 360b.

The image source 360a, 360b consequently, illuminates pixels in its array to generate light bearing the virtual image or imagery. This light is transmitted inwards towards the relay optics 400a, 400b.

The light is received at the relay optics 400a, 400b and transmitted inwards through the series of lenses 408a, 408b and towards the casing reflector 202a, 202b.

The light is received at the casing reflector 202a, 202b and at least partially reflected towards the back reflector 204a, 204b. Due to the relative inclinations between the casing reflector axis (iii) and the casing axis (ii), light is directed backwards and downwards.

The light is received at the back reflector 204a, 204b and is at least partially reflected towards the combiner 206a, 206b. Due to the relative inclinations between the casing reflector axis (iii), the casing axis (ii) and the back reflector axis (iv), light is directed forwards and downwards.

At the combiner 206, due to the relative inclinations between the casing reflector axis (iii), the casing axis (ii), the back reflector axis (vi), and the combiner axis (v), light is directed backwards and substantially horizontally. The combiner 206a, 206b is at user eye level. Thus the light is at least partially reflected towards the eye of the user.

The relay optics 400, casing reflector 202, back reflector 204 and combiner 206 represent the sub-assembly optical train.

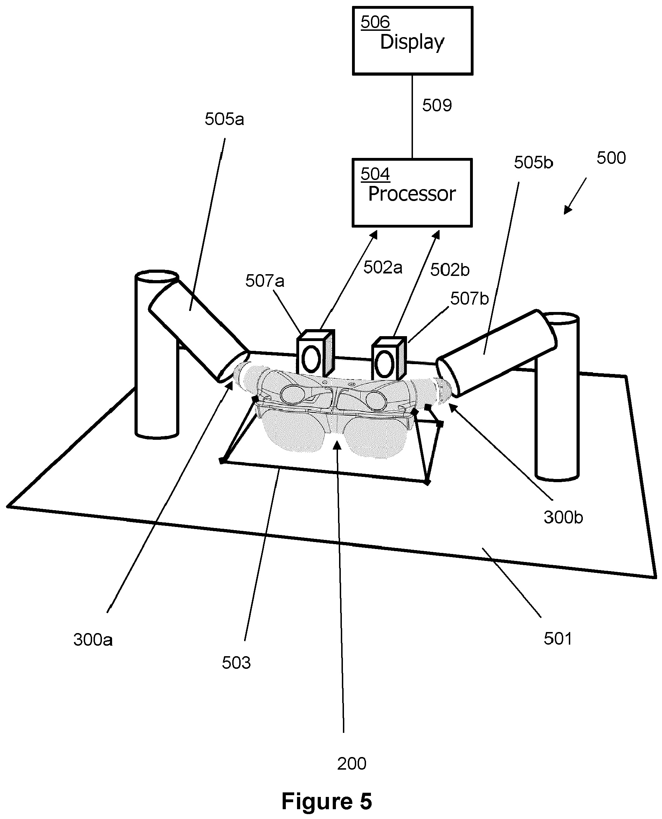

With reference to Figure 5, there is shown an apparatus 500 for aligning each image source 360a, 360b, contained in the end casing 300a, 300b, at the HMD device sub-assembly 200.

The apparatus 500 comprises a mount 503 for holding the sub assembly 200.

The apparatus 500 further comprises a jig 505a and 505b for each of the end casings 300a, 300b to be arranged at the sub-assembly. Each jig 505a, 505b is configured to hold an end casing 300a, 300b in proximity to the mounted sub-assembly 200 and to permit translation and rotation of the end casing 300a or 300b relative to the sub-assembly 200. Each jig is capable of fine adjustments in position and orientation of its respective end casing. Each jig is capable of translating its respective end casing relative to the mounted sub-assembly 200 in three axes, and is capable of rotating it about three axes.

The apparatus 500 further comprises a substrate 501 to which the mount 503 and jigs 505a, 505b are fixed.

The apparatus 500 further comprising monitoring equipment comprising a pair of image sensors 507a, 507b, a processor 504 and a display 506.

Each imaging device is located at a respective output of the sub-assembly 200, and generates image data 502a, 502b which is transmitted to the processor 504 via a wired or wireless connection. The processor 504 receives the image data and generates monitor data 509. The processor 504 is linked to a display 506 such that monitor data 509 may be represented visually to a user.

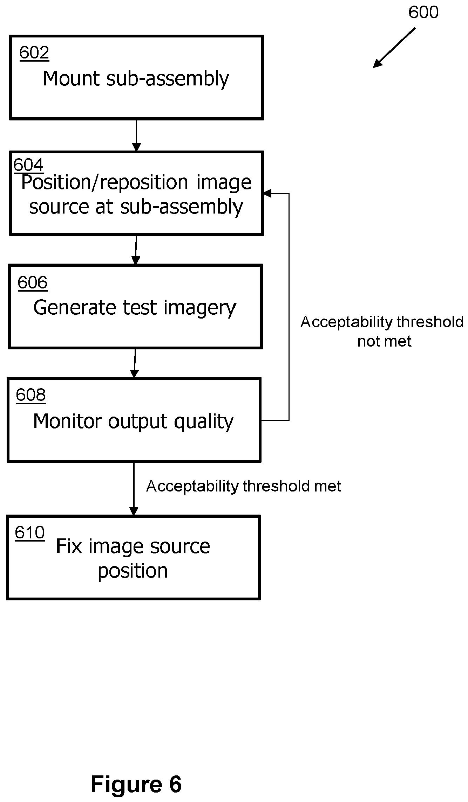

With reference to Figure 6 a method 600 of assembling a head mounted display 100 is to be described.

The method 600 comprises providing a sub-assembly 200. Step 602 comprises mounting the sub-assembly 200 at the mount 503.

Step 604 comprises making an initial positioning of an image source 360 at the sub-assembly 200, specifically at the input region of the sub assembly 200.

Step 606 comprises generating test imagery at the image source 360. This is done by sending suitable image signals to the image source 360 and thereby causing the image source 360 to generate light bearing the test imagery. The light generated by the image source will then tend to propagate through the optical train of the sub-assembly 200 and arrive at the output from the optical train.

Step 608 comprises monitoring the quality of the test imagery at the output from the optical train. Monitoring may be performed by a user directly observing the virtual images at the output and assessing quality subjectively. Alternatively, the monitoring may be performed by locating an image sensor 507a, 507b at the output, and relaying the collected optical data 502a, 502b to a processor 506, which may process the optical data to generate monitor data 509 which may be output as a human readable image at a display 506.

More particularly, the optical data 502a, 502b may be processed at the processor 506 to determine a modular transfer function (MTF) for the test imagery. Alternatively the optical data 502a, 502b may be processed to determine a contrast transfer function (CTF).

If the quality of the imagery, as assessed at step 608, is above a threshold of acceptability, then the image source and the sub-assembly will be deemed to be in operational alignment.

If the quality of the imagery, as assessed at step 608, is below a threshold of acceptability, then the method returns to step 604 where the position is adjusted prior to repeating steps 606 and 608. This loop circulates until operational alignment is established.

Once in operational alignment, the image source 360 is fixed to the sub-assembly 200 with no further movement relative to one another.

In some examples the image source 360 is provided mounted within an open sided end casing 300 which fits over an exposed docking section 406 at the distal/outer end of the sub-assembly 200. This fit permits a range of relative positions and orientations where the end casing 300 and the sub-assembly 200 overlap. This range of positions and orientations permits the adjustment/repositioning of the image source 360 at the sub-assembly 200. This fit tends to define a gap 105 between the end casing 300 and the docking portion 406. When in operational alignment this gap defines an operational interstice.

Further provided in the end casing 300 is a conduit 306 through which adhesive (such as a low-shrinkage optical cement) may be applied into the operational interstice 105 to bond the parts together. A curing stage may be provided after the application of the adhesive to facilitate the bonding.

Such a method has been found to allow for positional accuracy between the end cap with the image device therein, and the sub-assembly 200 to tolerances of plus or minus one micron, and plus or minus half a micron.

As shown in Figure 3, the conduit 306 is a hole through the wall of the end casing 300, connecting the inner surface of the end casing to the ambient environment.

The method 600 may be performed for one image source 360a, 360b independently of the other image source 360b, 360a. Accordingly, both image sources may be applied to the sub-assembly 200 at substantially the same time, or at different times.

In the present description, features are defined in physical space by reference to both a set of mutually orthogonal axes (X, Y, and Z) and also by reference to front vs back relative locations, inner vs outer relative locations, and upper vs lower relative locations. Front vs back generally corresponds to the X axis; inner vs outer generally corresponds to the Y axis; and upper vs lower generally corresponds to the Z axis. These terms are used to ease discussion of complex physical features and are not intended as limiting e.g. insofar as an 'upper' component must always be positioned at a higher altitude to a 'lower' component.

Certain specific components have been mentioned such as LED arrays and low-shrinkage optical cement. However suitable alternatives would be apparent to the skilled reader.

Reflectors may be substantially reflective, or partially reflective. They may be configured to be partially transmissive. A reflectors may be provided in the form of a mirror, or a mirrored surface.

The combiner may be partially transmissive in order to effect an augmented reality head worn display (e.g. a display which mixes virtual imagery with an ambient view of the real world).

## Claims

1. A frame (210) for supporting a head worn display on a user, comprising:
a first portion arranged for a first user eye and comprising:
a first casing (208a) for optical components;
a first back mount (203a) for a back reflector the back mount defining a plane for the back reflector and a corresponding back reflector axis perpendicular to the plane; and
a first front mount (205a) for a combiner, the front mount defining a plane for the combiner and a corresponding combiner axis perpendicular to the plane;
wherein the back mount is arranged to position a back reflector proximate to the user's first brow and such that the casing is arranged to extend from an inner end proximate to the brow to an outer end proximate to the user's temple,
a second portion arranged for the other eye and comprising:
a second casing (208b) for second optical components;
a second back mount (203b) for a second back reflector, the back mount defining a plane for the back reflector and a corresponding back reflector axis perpendicular to the plane; and
a second front mount (205b) for a second combiner for the other eye the front mount defining a plane for the combiner and a corresponding combiner axis perpendicular to the plane;
wherein the second back mount is arranged to position a second back reflector proximate to the user's other brow and such that the second casing is arranged to extend from an inner end proximate to the other brow to an outer end proximate to the users other temple,
a bridge member extending between the first and second casing, thereby defining a frame transverse axis, arranged to be worn substantially parallel with the user's transverse plane the frame transverse axis defining an x-axis perpendicular thereto and for alignment with the users forward view axis when worn,
wherein each of the back mounts and each of the front mounts extend downwards from the bridge member.

2. A frame according to claim 1 wherein at least one casing (203) has an elongate form and thereby defines a casing axis which is substantially coplanar with the frame transverse axis and thereby defines an XY plane, and wherein the casing axis is arranged to be inclined to the x-axis by 45-60 degrees, to thereby approximately follow the contour of the user's forehead.

3. A frame according to claim 2 wherein at least one casing is arranged to be inclined by 50 to 55 degrees.

4. A frame according to any of the preceding claims wherein the bridge member comprises:
a back beam (212) comprising the first and second back mounts, the back beam extending between the first casing and the second casing; and
a front beam (214), separated from the back beam (212) and comprising the first front mount and the second front mount, the front beam extending between the first casing and the second casing.

5. A frame according to claim 4 further comprising a cross-linking strut (216) extending between the back beam and the front beam.

6. A frame according to claim 4 or claim 5 comprising an attachment point (218) at an upper surface for fixture to a helmet mount.

7. A frame according to any of the preceding claims comprising:
an end casing (300) with an image mount for an image source;
a relay optics section (400) defining a relay optics axis and arranged facing the end casing; and
a casing reflector mount (201) for a casing reflector arranged facing the relay optics section and being for passing light from the relay optics to an associated back reflector.

8. A frame according to claim 7 wherein
the relay optics axis is substantially aligned with the casing axis,
the image mount (304) defines an image plane and a corresponding image axis perpendicular thereto, the image axis being inclined to the casing axis,
the casing reflector mount (201) defines a casing reflector plane and corresponding casing reflector axis for the casing reflector, the casing reflector axis being inclined to the relay optics axis in the xy plane and in the zx-plane,
the back reflector mount (203) defines a back reflector plane and a back reflector axis, the back reflector axis being inclined to the relay optics axis in the xy plane and in the zx-plane, and
the front mount (205) for a combiner defines a combiner plane and corresponding combiner axis perpendicular to the plane, the combiner axis being inclined to the relay optics axis in the xy plane and in the zx-plane.

9. A frame according to claim 8 wherein the image axis is inclined to the casing axis in the xy-plane and/or in the zy-plane.

10. A frame according to claim 9 wherein the image axis is inclined to the casing axis in the xy-plane and/or in the zy-plane in the range of 5 and 15 degrees.

11. A frame according to claim 7 to 10 wherein
the casing reflector axis is inclined to the relay optics axis in the xy-plane in the range of 20 to 30 degrees and in the zx-plane in the range of 10 to 20 degrees,
the back reflector axis is inclined to the relay optic axis in the xy-plane in the range of 40 to 50 degrees and in the zx-plane in the range of 130 to 150 degrees, and
the combiner axis is inclined to the relay optic axis n the xy-plane in the range of 40 to 50 degrees and in the zx-plane in the range of 130 to 150 degrees.

12. A frame according to any one of claims 7 to 11 wherein the end casing (300) has the form of an open casing and may couple to the relay optics section at a docking portion over a range of positions, thereby being fixable in a range of alignments between the image mount and the relay optics axis.

13. A frame according to any of the preceding claims wherein the first back mount and the first combiner mount are tilted relative to the second back mount and the second combiner mount, in the xy-plane by an angle in the range of 2-6 degrees.

14. A frame according to any one of the preceding claims wherein each of the first and second casing (208a, 208b) for optical components comprises an intermediate housing (402a, 402b) for accommodating a set of lenses of an optical relay.

15. A head worn display comprising
A frame according to any one of the preceding claims
A first and second back reflector coupled to the respective back reflector mounts
A first and second optical assembly installed into the respective casings a first and second combiner coupled to the respective front mounts.
